Europäisches Patentamt

European Patent Office

Office européen des brevets

(11) Veröffentlichungsnummer: **0 241 093**
**A2**

# (12) EUROPÄISCHE PATENTANMELDUNG

(21) Anmeldenummer: **87200606.9**

(51) Int. Cl.4: **G01B 11/02 , G01L 11/00**

(22) Anmeldetag: **01.04.87**

(30) Priorität: **10.04.86 DE 3612035**

(43) Veröffentlichungstag der Anmeldung:
**14.10.87 Patentblatt 87/42**

(84) Benannte Vertragsstaaten:
**DE FR GB**

(71) Anmelder: **Philips Patentverwaltung GmbH
Wendenstrasse 35 Postfach 10 51 49
D-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **FR GB**

(72) Erfinder: **Kobs, Rolf
Kastanienring 5
D-2082 Tornesch(DE)**
Erfinder: **Orlowski, Reiner, Dr.
Rotdornweg 17
D-2085 Quickborn(DE)**

(74) Vertreter: **Koch, Ingo, Dr.-Ing. et al
Philips Patentverwaltung GmbH
Wendenstrasse 35 Postfach 10 51 49
D-2000 Hamburg 1(DE)**

(54) Optischer Wegsensor.

(57) Die Erfindung betrifft einen optischen Wegsensor mit einem von Licht mindestens zweier Wellenlängen durchstrahlten Medium, dessen Dämpfungswerte für die einzelnen Wellenlängen unterschiedlich sind und dessen in Strahlrichtung wirksame Dicke wegabhängig veränderbar ist. Ein besonders einfacher Aufbau ergibt sich dadurch, daß das Medium eine Farbstoff enthaltende Flüssigkeit ist, welche zwischen einem Festelement und einem dazu verschiebbaren Stellelement angeordnet ist.

FIG.1

## Optischer Wegsensor

Die Erfindung bezieht sich auf einen optischen Wegsensor mit einem von Licht mindestens zweier Wellenlängen durchstrahlten Medium, dessen Dämpfungswerte für die einzelnen Wellenlängen unterschiedlich sind und dessen in Strahlrichtung wirksame Dicke wegabhängig veränderbar ist.

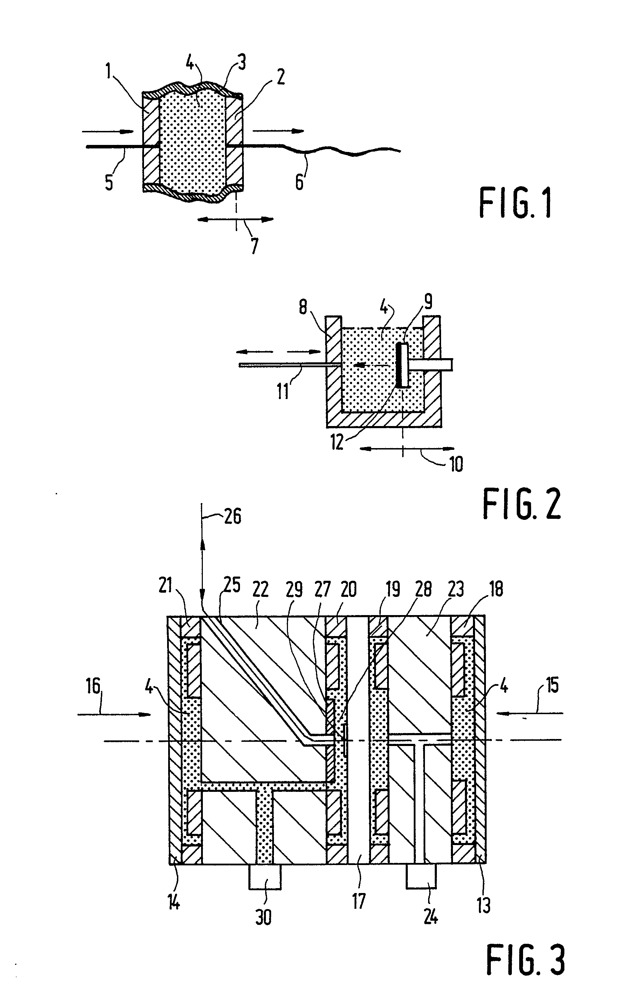

Ein derartiger Sensor ist durch I. Phys. E: Sci. Instrum., Vol. l8, l985, Seiten 253 bis 255, insbesondere Figur 2, bekannt. Dort wird ein Element senkrecht zur Strahlrichtung des Lichts verschoben, welches aus zwei rechtwinklig dreieckigen und entlang ihrer Hypotenusen aneinander geklebten Prismen besteht. Das eine Prisma besteht aus einem Material, dessen Dämpfungseigenschaften praktisch wellenlängenunabhängig sind. Das Material des anderen Prismas ist dagegen derart dotiert, daß sich für die verwendeten beiden Wellenlängen des Lichts verschieden starke Dämpfungen ergeben. Aus den für beide Wellenlängen unterschiedlich starken Abschwächungen des Sendelichts läßt sich eine Information über die zu messende Weglänge ermitteln, welche unabhängig von den Dämpfungseigenschaften der optischen Übertragungsstrecke ist. Das bekannte Doppelprisma ist ein aufwendiges Präzisionsbauteil.

Der Erfindung liegt die Aufgabe zugrunde, einen optischen Wegsensor der eingangs genannten Art zu vereinfachen.

Die Lösung gelingt dadurch, daß das Medium eine Farbstoffe enthaltende Flüssigkeit ist, welche zwischen einem Festelement und einem dazu verschiebbaren Stellelement angeordnet ist.

Als besonders gut geeignete Flüssigkeit hat sich Diethylenglykol erwiesen, welches mit einem Farbstoff vermischt ist.

Eine Farbstoff enthaltende Flüssigkeit dämpft Licht verschiedener Wellenlängen unterschiedlich ab. Die für die Messung verwendeten benachbarten Wellenlängen der Lichtanteile und der Farbstoff sind so zu wählen, daß sich für beide Wellenlängen möglichst stark unterschiedliche Dämpfungsfaktoren $\alpha_1$ und $\alpha_2$ ergeben, damit eine hohe Meßempfindlichkeit erreicht wird.

Die Flüssigkeit kann zwischen dem Festelement und dem Stellelement in einfacher Weise eingebracht werden, ohne daß dafür aufwendige und mit Präzision zu bearbeitende Bauteile erforderlich sind.

Gemäß einer bevorzugten Ausführungsform ist vorgesehen, daß das Festelement mit dem Ende eines Lichtwellenleiters versehen ist, und daß das Stellelement eine zum Ende des Lichtwellenleiters hin gerichtete und zu dessen Achse orthogonale verspiegelte Fläche aufweist, durch welche der aus dem LWL austretende Lichtstrahl gleichachsig reflektiert wird. Dann ist nur ein einziger Lichtwellenleiter (LWL) mit dem Sensor zu verbinden, welcher sowohl Sendelicht zum Sensor als auch reflektiertes Licht zu einem Empfänger leitet. Darüberhinaus ermöglicht diese Ausführungsart eine besonders einfache konstruktive Lösung zur wegabhängigen Veränderung der Dicke des durchstrahlten Mediums.

Ein besonders vorteilhaftes und einfach gestaltbares Ausführungsbeispiel der Erfindung in Anwendung für eine Druckmessung ist dadurch gekennzeichnet, daß sich das Medium in einem abgeschlossenen Raum befindet, und einem zu messenden Druck ausgesetzt ist, und daß das Stellelement eine elastisch auslenkbare Membrane ist.

Die Erfindung wird anhand der Beschreibung von in der Zeichnung dargestellten vorteilhaften Ausführungsbeispielen näher erläutert.

Figur l zeigt schematisch einen Längsschnitt durch eine transmissiv betriebene Ausführungsform der Erfindung

Figur 2 zeigt schematisch einen Längsschnitt durch eine reflexiv betriebene Ausführungsform der Erfindung

Figur 3 zeigt einen Längsschnitt durch eine reflexiv betriebene Ausführungsform der Erfindung, welche speziell für die Messung eines Differenzdrucks bestimt ist.

Bei der in Figur l dargestellten Ausführungsform ist der Raum zwischen dem Festelement l, dem Stellelement 2 und dem diese umschließenden flexiblen Balg 3 mit Farbstoff enthaltender Flüssigkeit 4 gefüllt. Der durch das Festelement l geführte Sende-LWL 5 und der durch das bewegliche Stellelement 2 geführte Empfangs-LWL 6 reichen bis an die Flüssigkeit 4. Lichtanteile der Wellenlängen $\lambda_1$ und $\lambda_2$ werden von dem Sende-LWL 5 durch die Flüssigkeit 4 in den Empfangs-LWL 6 gestrahlt. Bei bekanntem Verhältnis der Sendeintensitäten der Lichtanteile der Wellenlängen $\lambda_1$ und $\lambda_2$ ist das Verhältnis der empfangenden Lichtintensitäten dieser Lichtanteile ein Maß für die Größe der Verschiebung des Stellelements 2 in Richtung des Doppelpfeils 7.

Eine besonders einfache Anordnung ergibt sich bei reflexiver Messung nach Figur 2. Der Behälter 8 ist als Festelement mit der gleichen Flüssigkeit 4 wie bei der Anordnung nach Figur l gefüllt. Das Stellelement 9 ist in Richtung des Doppelpfeils l0 verschiebbar in einer Wandung des Behälters 8 gelagert.

Die orthogonal zur Richtung des aus dem Sende-und Empfangs-LWL II gesendeten Lichtstrahls auf dem Stellelement 9 angeordnete Spiegelfläche I2 reflektiert. Anteile des gesendeten Lichts in den LWL II zurück zu einem nicht dargestellten Empfänger.

Bei dem in Figur 3 dargestellten Anwendungsbeispiel ist ein erfindungsgemäßer Wegsensor in einen Differenzdrucksensor nach dem an sich bekannten Zweikammerprinzip integriert. Auf die Endmembranen I3 und I4 wirken unterschiedliche Drücke in Richtung der Pfeile I5 bzw. I6 ein, so daß die Endmembranen dem jeweils wirkenden Druck entsprechend elastisch ausgelenkt werden. Die Endmembranen I3 und I4 sowie die Meßmembrane I7 sind mit ihren äußeren Rändern über Abstandsringe I8,I9,20 und 2I (Glasschichten) an Grundkörpern 22 und 23 befestigt, so daß jeweils mit gefärbter Flüssigkeit 4 gefüllte abgeschlossene Räume beidseitig der Meßmembrane I7 gebildet sind, die über angedeutete Ventile 30 bzw. 24 durch entsprechende Kanäle in den Grundkörpern 22 bzw. 23 gefüllt werden.

Die Differenz des auf die Endmembranen I3 und I4 einwirkenden Drucks bewirkt über die Flüssigkeiten 4 eine druckabhängige Vor-oder Rückwölbung der Meßmembrane I7, die über einen erfindungsgemäßen Wegsensor gemessen wird.

Durch den Führungskanal 25 des Grundkörpers 22 ist ein Sende-und Empfangs-LWL 26 durch die Glasauflageschicht 27 bis an die Schicht 28 der Flüssigkeit 4 geführt. Der Abstand zwischen dem Ende des LWL 26 und der auf der Meßmembrane I7 aufgebrachten Spiegelschicht 29 ändert sich differenzdruckabhängig. Wenn in den LWL 26 Lichtintensitäten $I_{10}$ und $I_{20}$ des Lichts der Wellenlängen $\lambda_1$ und $\lambda_2$ gesendet und die entsprechenden von der Spiegelschicht 29 in den LWL 26 geflektierten Intensitäten $I_{11}$ und $I_{21}$ gemessen werden, läßt sich die druckabhängige Dicke d der Schicht 28 zwischen dem Ende des LWL 26 und der Spiegelschicht 28 aus der Gleichung

$$\frac{I_{11}}{I_{21}} = \frac{I_{10}}{I_{20}} \cdot e^{-2 \, d \, (\alpha_1 - \alpha_2)}$$

berechnen, wenn $\alpha_1$ und $\alpha_2$ die Dämpfungskonstanten der gefärbten Flüssigkeit 4 bei den Wellenlängen $\lambda_1$ und $\lambda_2$ sind.

Bei einem ausgeführten Beispiel wurde als gefärbte Flüssigkeit 4 Diethylenglykol mit 4% Farbstoffanteilen (Diphenylschwarz FG der Firma Ciba Geigy) verwendet. Gemessen wurde mit Lichtanteilen der Wellenlängen $\lambda_1$ = 860 nm und $\lambda_2$ = 780 nm. Dabei ergab sich ein Verhältnis $\alpha_2/\alpha_1$ von etwa

I0. Bei Änderung der Dicke d von I5 $\mu$m auf 30 $\mu$m änderte sich der Quotient $I_{11}/I_{21}$ nahezu linear um 30 %, so daß eine genügend empfindliche Messung möglich war.

## Ansprüche

I. Optischer Wegsensor mit einem von Licht mindestens zweier Wellenlängen durchstrahlten Medium, dessen Däpfungswerte für die einzelnen Wellenlängen unterschiedlich sind und dessen in Strahlrichtung wirksame Dicke wegabhängig veränderbar ist, dadurch gekennzeichnet, daß das Medium eine Farbstoff enthaltende Flüssigkeit (4) ist, welche zwischen einem Festelement (I,8,22) und einem dazu verschiebbaren Stellelement (2,9,I7) angeordnet ist.

2. Wegsensor nach Anspruch I, dadurch gekennzeichnet, daß das Medium Diethylenglykol ist, welches mit einem Farbstoff vermischt ist.

3. Wegsensor nach einem der Ansprüche I oder 2, dadurch gekennzeichnet, daß das Festelement (8) mit einem Ende eines Lichtwellenleiters (II) versehen ist, und daß das Stellelement (9) eine zum Ende des Lichtwellenleiters (II) hin gerichtete und zu dessen Achse orthogonale verspiegelte Fläche (I2) aufweist, durch welche der aus dem LWL (II) austretende Lichtstrahl gleichachsig reflektiert wird.

4. Wegsensor nach Anspruch 3, dadurch gekennzeichnet, daß sich das Medium in einem abgeschlossenen Raum befindet und einem zu messenden Druck ausgesetzt ist, und daß das Stellelement eine elastische auslenkbare Membrane (I7) ist.

FIG.1

FIG.2

FIG.3